(19) Europäisches Patentamt
European Patent Office
Office européen des brevets

(11) **EP 4 403 782 A1**

(12) **EUROPEAN PATENT APPLICATION**

(43) Date of publication:
24.07.2024 Bulletin 2024/30

(21) Application number: 23151938.0

(22) Date of filing: 17.01.2023

(51) International Patent Classification (IPC):
**F16B 13/14** (2006.01)      **F16B 25/00** (2006.01)

(52) Cooperative Patent Classification (CPC):
**F16B 13/141; F16B 25/0026**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hilti Aktiengesellschaft**
**9494 Schaan (LI)**

(72) Inventors:
• **Spampatti, Matteo**
  **9470 Buchs (CH)**
• **Schaeffer, Marc**
  **8852 Altendorf (CH)**

(74) Representative: **Hilti Aktiengesellschaft
Corporate Intellectual Property
Feldkircherstrasse 100
Postfach 333
9494 Schaan (LI)**

(54) **SCREW ANCHOR FOR A HYBRID SCREW ANCHOR SYSTEM**

(57)    Screw anchor comprising,
- a shank, and
- at least one screw thread, which is arranged on the shank,
characterized in that
- at least in a middle region of the screw thread, the outer diameter OD of the screw thread, measured in mm, and the core diameter CD of the shank, measured in mm, have the following relationship:
• OD/CD < (1.580-0.023*CD) in cases where CD < 15.6;
• OD/CD < 1.221 in cases where CD >= 15.6.

Fig. 5

EP 4 403 782 A1

## Description

The invention relates to a screw anchor according to the preamble of claim 1, as well as to a hybrid screw anchor system and to a structure, both including such a screw anchor.

Screw anchors, in particular intended to be installed in a mineral substrate, such as concrete, but also screed, brick or plaster and others, are known in the art. Typical applications for screw anchors are mechanical, electrical, and plumbing (MEP) applications (e.g. fastening water pipes, fastening sprinklers, fastening heating, ventilation, and air conditioning (HVAC) elements, and others), and also baseplate applications, which might be structural or non-structural (e.g. baseplates for machineries, fences, handrails, and others). Advantages of screw anchors might include particularly high productivity at installation, easy availability of aesthetically pleasing heads and easy availability of a big portfolio.

In this connection, hybrid screw anchor systems have been described and marketed. These hybrid screw anchor systems comprise a screw anchor and a quantity of grout which is intended to harden around the installed screw anchor, wherein the grout can be positioned in the borehole e.g. in a cartridge or by means of a dispensing device.

EP3599384A1 discloses a method for controlling the correct installation of a hybrid screw anchor system.

EP0955476 A2 describes hybrid screw anchor systems, and points out that the grout allows to have a small screw thread engagement depth in concrete.

DE10311471 A1 describes grouted anchors having a rod with cone-like features.

DE19957112 A1 describes the fastening of screw anchors in blind in of brittle façade panels, wherein the screw anchors are secured by a cartridge of adhesive.

EP3608549 A1 discloses a method for temporarily releasing the anchorage provided by a screw anchor.

It is an object of the invention to provide a screw anchor, as well as a hybrid screw anchor system and a structure including such a screw anchor, which have particularly good performance and/or ease of installation.

This object is achieved by a screw anchor according to claim 1, by a hybrid screw anchor system according to claim 8 and by a structure according to claim 9. Dependent claims refer to preferred embodiments of the invention.

There is thus provided a screw anchor comprising,

- a shank, and
- at least one screw thread, which is arranged on the shank,

wherein

- at least in a middle region of the screw thread, the outer diameter OD of the screw thread, measured in mm, and the core diameter CD of the shank, measured in mm, have the following relationship:

- OD/CD <(1.580-0.023*CD) in cases where CD < 15.6;
- OD/CD < 1.221 in cases where CD >= 15.6.

It is thus stipulated that at least in a middle region of the screw thread, the screw anchor has OD/CD ratio smaller than (1.580-0.023*CD) where the CD of the shank is smaller than 15.6mm, whereas if the CD of the shank is greater or equal to 15.6mm, then the OD/CD needs to be smaller than 1.221.

This concept can provide a screw anchor that is particular suitable for use in a hybrid screw anchor system, i.e. in combination with a hardenable grout. The concept can provide a screw anchor that can be particularly easy to install, possibly without impact drive. Nevertheless, the screw anchor provides sufficient immediate loading behaviour, which allows to load the screw anchor immediately after installation. Final load capacity can then be provided by the hardened grout. For example, the immediate loading capacity might be around 30% of the final load capacity. In particular, the screw anchor is a concrete screw anchor, i.e. a screw anchor suitable for being tappingly inserted into concrete.

The middle region of the screw thread is a region that is, axially with respect to the screw anchor axis, distant from the screw thread start of the screw thread and from the screw thread end of the screw thread. In other words, it is located, axially, in the middle of the screw thread. In particular, the middle region can extend over at least one turn, at least two turns or at least three turns of the screw thread, i.e. over a significant length of the screw thread.

The at least one screw thread winds around the shank in a generally helical manner. However, deviations from a strict mathematical helix might be provided in order to improve functionality. The shank and the at least one screw thread are preferably monolithic, but could also be non-monolithic. The screw anchor can also have at least one additional screw thread.

Preferably, at least in the middle region of the screw thread, the outer diameter OD of the screw thread, measured in mm, and the core diameter CD of the shank, measured in mm, have the following relationship:

- OD/CD < (1.525-0.023*CD) in cases where CD < 13.2;
- OD/CD < 1.221 in cases where CD >= 13.2.

Accordingly, the OD/CD ratio is smaller than (1.525-0.023*CD) where the CD of the shank is smaller than 13.2mm, whereas if the CD of the shank is greater or equal to 13.2mm, then the OD/CD is smaller than 1.221.

Advantageously, at least in the middle region of the screw thread, the outer diameter OD of the screw thread, measured in mm, and the core diameter CD of the shank, measured in mm, have the following relationship:

- OD/CD > (1.24-0.004*CD) in cases where CD < 15.6.

Accordingly, the OD/CD ratio is bigger than (1.24-0.004*CD) where the CD of the screw anchor is smaller than 15.6mm.

Preferably, the core diameter CD of the shank is grater or equal than 6mm, and/or the core diameter CD of the shank is smaller or equal than 24mm, both at least in the middle region of the screw thread. This is a particular suitable sizing for mineral substrates.

The screw anchor can further comprise a drive, which is connected to the shank for rotationally driving the shank. The drive could for example be an external hex drive provided on a head of the screw anchor, or an internal hex drive provided within the shank.

The shank can, preferably, consist of carbon steel or stainless steel, and/or the at least one screw thread can consist of carbon steel or stainless steel.

The invention also relates to a hybrid screw anchor system, comprising:

- a screw anchor as described,
- a quantity of grout intended for encasing the screw anchor.

Thus, the hybrid screw anchor system comprises the screw anchor as described here, together with the quantity of grout in which the screw anchor is intended to be embedded or in which the screw anchor is embedded. The quantity of grout can be single-component or multi-component, in particular two component. It can be e.g. delivered as a cartridge or from a dispensing device.

Preferentially, the quantity of grout has the following minimum weight (in grams)

- (0.96*CD-7.05) in cases where CD > 8.4;
- 1.00 in cases where CD <= 8.4.

Thus, the minimum amount of grout follows the rule (in grams):

- (0.96*CD-7.05) where the CD of the screw anchor is bigger than 8.4mm;
- if the CD of the screw anchor is smaller or equal to 8.4, then the grout weight needs to be bigger than 1.00g.

The invention also relates to a structure comprising

- a hybrid screw anchor system as described; and

- a mineral substrate, preferably a concrete substrate, having a bore in which the screw anchor is arranged.

Preferably, an (axial) embedment depth ED of the screw anchor within the bore is greater or equal 3.5*CD. Thus, the embedment depth of the screw anchor within concrete is greater or equal than 3.5*CD.

The structure could also include an attachment part that is held to the substrate by means of the screw anchor.

The core diameter CD in the middle region and the nominal size NS of the screw anchor can have the following approximate relationship:

$$CD \approx 0.9139 * NS + 0.1714.$$

Throughout this document - wherever the terms "axially", "longitudinally", "radially" and "circumferentially" are used, they should refer, in particular, to the screw anchor axis, which is in particular the longitudinal axis of the shank.

Throughout this document, ED, CD and OD are in mm (millimetres).

The invention is explained in greater detail below with reference to preferred exemplary embodiments, which are depicted schematically in the accompanying drawings. Individual features of the exemplary embodiments presented below can be implemented either individually or in any combination within the scope of the present invention.

Figures 1 to 4 show consecutive steps of installing a hybrid screw anchor system in a bore in a mineral substrate.

Figure 5 shows details of the screw anchor used in the sequence of figures 1 to 4.

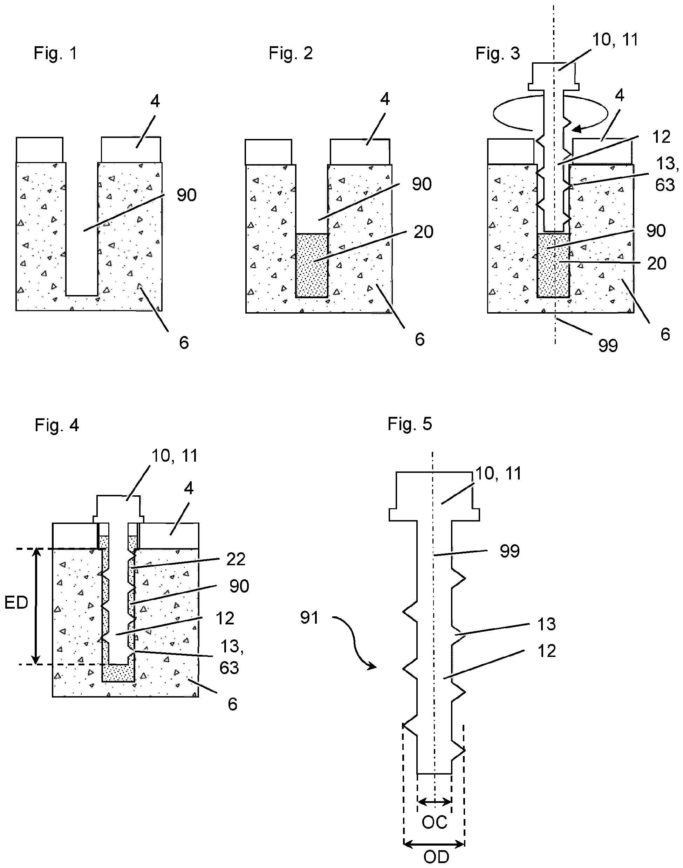

In a first step shown in figure 1, a bore 90 is provided in a mineral substrate 6. The substrate 6 is preferably a concrete substrate, and the bore 90 can preferably be a blind bore. The bore 90 can for example be provided by drilling or by casting-in a plug into liquid concrete and subsequent removal after the concrete has, at least partly, set.

Positioning of the bore 90 on the substrate 6 can for example be done manually, or by means of a total station or/and control lines. If the bore is drilled, it might or might not be cleaned afterwards.

Subsequently, and as shown in figure 2, a quantity of hardenable grout 20 is placed in the bore 90. This can for example be done by injecting the grout into the bore 90 using a dispenser or by placing a cartridge containing the hardenable grout 20 in the bore 90. If a cartridge is used, the hardenable grout 20 can be a two component hardenable grout. In particular, the hardenable grout 20 can be a mortar or/and an adhesive.

An attachment part 4 is arranged at the surface of the substrate 6 surrounding the bore 90, so that an opening in the attachment part 4 is aligned with the bore 90. This can be done after placing, during placing or, as shown by way of example here, before placing the hardenable grout 20 in the bore 90.

As shown in figure 3, a screw anchor 10 is then provided, which screw anchor 10 is shown in more detail in figure 5. The screw anchor 10 has a generally cylindrical shank 12 that defines a screw anchor axis 99. The screw anchor 10 moreover has a screw thread 13 that is arranged on the shank 12 and helically surrounds both the shank 12 and the screw anchor axis 99. In the shown embodiment, the screw thread 13 and the shank 12 are monolithic, but non-monolithic embodiments are also feasible. The screw anchor 10 is a tapping screw, which means that the screw anchor 10, in particular its screw thread 13, is able to cut the substrate 6 and to form a mating screw thread 63 in the substrate 6. The screw anchor 10 has a drive for imparting torque (around the screw anchor axis 99) on the screw anchor 10. In the present case, the drive is an external hex-drive, which is provided on a head of the screw anchor 10.

As shown in figure 5 the shank 12 defines a core diameter CD, and the screw thread 13 defines an outer diameter OD, wherein both CD and OC are generally constant within a middle region 91 of the screw thread 13. The middle region 91 of the screw thread 13 is axially distant from the thread start and the thread end. In the present embodiment, the middle region 91 spans most of the axial length of the screw thread 13.

As shown in figure 3, the screw anchor 10 is screwed into the bore 90, around the screw anchor axis 99 and preferably by means of an impact wrench, and in this connection, the screw thread 13 of the screw anchor 10 forms a mating screw thread 63 in the substrate 6 in the wall of the bore 90.

As the screw anchor 10 is lowered into the bore 90, it displaces hardenable grout 20, causing hardenable grout 20 to flow alongside the shank 12 of the screw anchor 10 towards the mouth of the bore 90. The hardenable grout 20 forms a liner 22 there, covering the wall of the bore 90. The screw anchor 10 is screwed into the bore 90 until the head of the screw anchor 10, directly or via for example a washer, abuts on the attachment part 4, resulting in the structure shown in figure 4. The screw anchor is then at an (axial) embedment depth ED within the bore 90 and within the substrate 6.

The hardenable grout 20 of the liner 22 hardens and can thus improve performance of the screw anchor 10.

**Claims**

1. Screw anchor (10) comprising,

   - a shank (12), and
   - at least one screw thread (13), which is arranged on the shank (12),

**characterized in that**

   - at least in a middle region (91) of the screw thread (13), the outer diameter OD of the screw thread (13), measured in mm, and the core diameter CD of the shank (12), measured in mm, have the following relationship:

     • OD/CD < (1.580-0.023*CD) in cases where CD < 15.6;
     • OD/CD < 1.221 in cases where CD >= 15.6.

2. Screw anchor (10) according to claim 1, **characterized in that** at least in the middle region (91) of the screw thread (13), the outer diameter OD of the screw thread (13), measured in mm, and the core diameter CD of the shank (12), measured in mm, have the following relationship:

   • OD/CD < (1.525-0.023*CD) in cases where CD < 13.2;
   • OD/CD < 1.221 in cases where CD >= 13.2.

3. Screw anchor (10) according to claim 2, **characterized in that** at least in the middle region (91) of the screw thread (13), the outer diameter OD of the screw thread (13), measured in mm, and the core diameter CD of the shank (12), measured in mm, have the following relationship:

   • OD/CD > (1.24-0.004*CD) in cases where CD < 15.6.

4. Screw anchor (10) according to any of the preceding claims, **characterized in that** the core diameter CD of the shank (12) is grater or equal than 6mm, at least in the middle region (91) of the screw thread (13).

5. Screw anchor (10) according to any of the preceding claims, **characterized in that** the screw anchor (10) further comprises a drive, which is connected to the shank (12) for rotationally driving the shank (12).

6. Screw anchor (10) according to any of the preceding claims, **characterized in that**

   the shank (12) consists of carbon steel or stainless steel, and/or
   the at least one screw thread (13) consists of carbon steel or stainless steel.

7. Hybrid screw anchor (10) system, comprising:

   - a screw anchor (10) according to any of the preceding claims,
   - a quantity of grout (20) intended for encasing the screw anchor (10).

8. Hybrid crew anchor system according to claim 7, **characterized in that** the quantity of grout (20) has the following minimum weight (in grams)

   - (0.96*CD-7.05) in cases where CD > 8.4;
   - 1.00 in cases where CD <= 8.4.

9. Structure comprising:

   - a hybrid screw anchor system according to any of claims 7 or 8; and
   - a mineral substrate (6) having a bore (90) in which the screw anchor (10) is arranged.

10. Structure anchor according to claim 9, **characterized in that** an embedment depth ED of the screw anchor (10) within the bore (90) is greater or equal 3.5*CD.

Fig. 1

Fig. 2

Fig. 3

Fig. 4

Fig. 5

Europäisches
Patentamt

European
Patent Office

Office européen
des brevets

# EUROPEAN SEARCH REPORT

**Application Number**

EP 23 15 1938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 033 533 A1 (FISCHERWERKE GMBH & CO KG [DE]) 22 June 2016 (2016-06-22) | 1,2,4-6 | INV.<br>F16B13/14<br>F16B25/00 |
| Y | * page 2, paragraph 1; figures * | 7-10 | |
| X | EP 1 936 213 A2 (HILTI AG [LI]) 25 June 2008 (2008-06-25) | 1-3,5,6 | |
| Y | * paragraphs [0003], [0007]; claim 1; figures * | 7-10 | |
| X | US 2009/022568 A1 (BECKER JAN-CHRISTIAN [DE] ET AL) 22 January 2009 (2009-01-22) | 1-3,5,6 | |
| Y | * paragraph [0010]; figure * | 7-10 | |
| Y | US 2010/247267 A1 (BIANCHI PIETRO [CH] ET AL) 30 September 2010 (2010-09-30) * paragraphs [0003], [0048]; figures * | 7-10 | |
| Y | EP 3 578 832 A1 (WUERTH ADOLF GMBH & CO KG [DE]) 11 December 2019 (2019-12-11) * paragraph [0032]; figures * | 7-10 | |
| | | | **TECHNICAL FIELDS SEARCHED (IPC)** |
| Y | DE 298 24 929 U1 (FISCHER ARTUR WERKE GMBH [DE]) 10 July 2003 (2003-07-10) * paragraphs [0033] - [0036]; figures * | 7-10 | F16B |

The present search report has been drawn up for all claims

| Place of search | Date of completion of the search | Examiner |
|---|---|---|
| Munich | 3 July 2023 | Pöll, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 1938

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2023

| Patent document cited in search report | | | Publication date | Patent family member(s) | | | Publication date |
|---|---|---|---|---|---|---|---|
| EP 3033533 | A1 | | 22-06-2016 | CN | 105431643 | A | 23-03-2016 |
| | | | | DE | 102013108743 | A1 | 19-02-2015 |
| | | | | EP | 3033533 | A1 | 22-06-2016 |
| | | | | ES | 2719055 | T3 | 08-07-2019 |
| | | | | PL | 3033533 | T3 | 31-07-2019 |
| | | | | TR | 201903779 | T4 | 22-04-2019 |
| | | | | TW | 201525309 | A | 01-07-2015 |
| | | | | WO | 2015022049 | A1 | 19-02-2015 |
| EP 1936213 | A2 | | 25-06-2008 | DE | 102006000539 | A1 | 26-06-2008 |
| | | | | EP | 1936213 | A2 | 25-06-2008 |
| | | | | US | 2008145182 | A1 | 19-06-2008 |
| US 2009022568 | A1 | | 22-01-2009 | AU | 2006237073 | A1 | 26-10-2006 |
| | | | | CN | 101160471 | A | 09-04-2008 |
| | | | | DE | 102005017596 | A1 | 19-10-2006 |
| | | | | EP | 1872021 | A1 | 02-01-2008 |
| | | | | JP | 2008537989 | A | 02-10-2008 |
| | | | | KR | 20080005917 | A | 15-01-2008 |
| | | | | US | 2009022568 | A1 | 22-01-2009 |
| | | | | WO | 2006111267 | A1 | 26-10-2006 |
| | | | | ZA | 200707750 | B | 25-09-2008 |
| US 2010247267 | A1 | | 30-09-2010 | AU | 2010201015 | A1 | 14-10-2010 |
| | | | | CA | 2697581 | A1 | 24-09-2010 |
| | | | | DE | 102009001815 | A1 | 07-10-2010 |
| | | | | DK | 2233757 | T3 | 04-12-2017 |
| | | | | EP | 2233757 | A2 | 29-09-2010 |
| | | | | ES | 2645066 | T3 | 04-12-2017 |
| | | | | JP | 2010223432 | A | 07-10-2010 |
| | | | | PL | 2233757 | T3 | 28-02-2018 |
| | | | | US | 2010247267 | A1 | 30-09-2010 |
| EP 3578832 | A1 | | 11-12-2019 | DE | 102018209027 | A1 | 12-12-2019 |
| | | | | EP | 3578832 | A1 | 11-12-2019 |
| | | | | ES | 2898942 | T3 | 09-03-2022 |
| DE 29824929 | U1 | | 10-07-2003 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3599384 A1
- EP 0955476 A2
- DE 10311471 A1
- DE 19957112 A1
- EP 3608549 A1